# EUROPÄISCHE PATENTSCHRIFT

(11) **EP 1 645 928 B1**
(45) Veröffentlichungstag und Bekanntmachung des Hinweises auf die Patenterteilung: **12.11.2008**
(21) Anmeldenummer: 05014071.4
(22) Anmeldetag: 29.06.2005
(51) Int. Cl.: G05D 23/19, F24D 19/10

(54) **Verfahren zur Bestimmung eines Heizflächen-Versorgungszustands und Versorgungszustandsregler**
Method of determining the supply state of a heating surface and supply state regulator
Procédé de détermination de l'état d'alimentation d'une surface chauffante et régulateur d'état d'alimentation

(30) Priorität: 07.10.2004 DE 102004049112; 18.03.2005 DE 102005012597
(43) Veröffentlichungstag der Anmeldung: 12.04.2006
(60) Teilanmeldung: 08004350.8
(73) Patentinhaber: Techem Energy Services GmbH, 65760 Eschborn (DE)
(72) Erfinder: Kähler, Arne, Dr., 12683 Berlin (DE)
(74) Vertreter: KEIL & SCHAAFHAUSEN Patentanwälte

(56) Entgegenhaltungen:
- EP-A- 0 282 886
- EP-A- 1 158 250
- EP-A2- 1 235 131
- WO-A-03/052536
- BAUMGARTH S: "STRATEGIEN ZUR ENERGIEOPTIMALEN HEIZUNGSREGELUNG" HLH ZEITSCHRIFT FUR HEIZUNG, LUFTUNG, KLIMATECHNIK, HAUSTECHNIK, VDI VERLAG. DUSSELDORF, DE, Bd. 42, Nr. 5, 1991, Seiten 315-318, XP000195110

## Beschreibung

Die Erfindung betrifft ein Verfahren zur Bestimmung eines Heizkreis- oder Gebäudeversorgungszustands aus Heizflächen-Versorgungszuständen gemäß dem Oberbegriff des Anspruchs 1 und einen entsprechend eingerichteten Versorgungszustandsregler gemäß den Merkmalen des Anspruchs 9. Das Verfahren und die Versorgungszustandsregelung können insbesondere für eine bedarfsgeführte Optimierung der Vorlauftemperatur in Heizungsanlagen verwendet werden.

Das Anwendungsgebiet der Erfindung liegt daher insbesondere im Bereich der Heizungsanlagen mit einer thermostatischen oder elektronischen Einzelraumtemperaturregelung, deren Stellgröße eine Veränderung der Hubstellungen von Heizkörper-Stellventilen erzeugt. Ein Heizkörper im Sinne dieser Anmeldung ist dabei eine von einem Heizmittel oder -fluid, bspw. Wasser als flüssigem Wärmeträger, durchströmte Heizfläche im Sinne eines regelbaren Heizelements einer Fußbodenheizung. Die Heizwärme wird meist zentral in einem Heizungssystem erzeugt und über ein Rohrsystem dezentral verteilt.

Eine Vorrichtung zur Erfassung der Wärmeabgabe eines Heizkörpers ist aus der EP 1 158 250 A2 bekannt, bei der die Vorlauf- und Rücklauftemperatur des Heizkörpers und die Temperatur der von dem Heizkörper angesaugten Raumluft gemessen werden. Die Vorrichtung weist ferner einen Heizkörperregler Regulierung des Durchflusses von Heizmedium durch den Heizkörper auf.

In der überwiegenden Zahl bekannter Heizungsanlagen zur Wärmeversorgung von Gebäuden wird der Sollwert der Vorlauftemperatur des Heizmittels in Abhängigkeit der Außentemperatur gemäß einer stationären Heizungsfahrkurve geführt. Werden neben der Außentemperatur keine weiteren Führungsgrößen zur Regelung der Vorlauftemperatur berücksichtigt, führt diese Lösung in der Regel zu einem signifikanten Unterschied zwischen bereitgestellter momentaner Heizleistung und tatsächlichem aktuellen Gebäudewärmebedarf. Die Folge sind typischerweise zu hohe oder zu niedrige, also dem Bedarf nicht angepasste Systemtemperaturen, woraus für den praktisch weit verbreiteten Fall überhöhter Systemtemperaturen sowohl unnötige Wärmeverteilungsverluste als auch Überheizungszustände der Räume resultieren, die einen unnötigen, deutlichen Energiemehrverbrauch nach sich ziehen. Zu geringe Systemtemperaturen führen zu nicht ausreichenden Beheizungszuständen der Räume, also zu nicht erwünschtem Diskomfort.

Der Einsatz einer autark arbeitenden thermostatischen oder elektronischen Einzelraumtemperaturregelung kann die Effekte einer nicht angepassten Vorlauftemperatur kaum kompensieren, da die Eingriffsmöglichkeit dieser Einzelraumregelung nur auf die Drosselung des Heizmittelstromes durch die wärmeübertragenden Heizflächen beschränkt ist. Außerdem wird die Regelbarkeit der Raumtemperatur durch nicht angepasste Vorlauftemperaturen deutlich verschlechtert. So führen eine Überhöhung der Vorlauftemperatur infolge der dadurch erhöhten Rohrwärmeabgabe zu einer Verringerung des Regelbereiches der Einzelraumtemperaturregelung und eine zu geringe Vorlauftemperatur zu einem für das Erreichen der Solltemperatur nicht ausreichenden Regelbereich. Dieser Nachteil autarker Einzelraumtemperaturregelungen kann durch die Anpassung der Vorlauftemperatur bzw. des Vorlauftemperatursollwertes an den tatsächlichen Gebäudewärmebedarf beseitigt werden, wozu jedoch ein zusätzlicher technischer Aufwand erforderlich ist.

In dem Aufsatz S. Baumgarth, "Strategien zur energieoptimalen Heizungsregelung", HLH Zeitschrift für Heizung, Lüftung, Klimatechnik, Heiztechnik, VDI-Verlag Düsseldorf, 1991, wird eine Heizungsregelung beschrieben, welche durch Messung des Massen- bzw. Volumenstromes des Wassers und gleichzeitig der Temperaturspreizung zwischen der Vorlauf- und Rücklauftemperatur die Heizlast der gesamten Heizungsanlage berechnet. Dabei kann mittels eines zweidimensionalen Kennfelds aus einer Messung der Vorlauftemperatur und der Rücklauftemperatur in der Heizungsanlage auf den Wärmebedarf der gesamten Heizungsanlage geschlossen werden, solange der Massenstrom in der Heizungsanlage konstant ist. Wenn sich der Gesamtvolumenstrom in der Heizungsanlage ändert, müssen die Kennlinien auf drei Dimensionen erweitert werden, indem auch der Gesamtvolumenstrom noch mit berücksichtigt wird. Dies ist, wie auch in dem Aufsatz erwähnt, in der EP 0 282 886 A2 ausführlich behandelt. Dort wird die Temperaturdifferenz zwischen einer Anlagenvorlauf- und -rücklauftemperatur zusätzlich mit dem aus einer Messung bekannten Gesamtvolumenstrom multipliziert und das daraus gebildete Lastfeld durch Änderung der Vorlauftemperatur entsprechend angepasst.

Wie in dem Aufsatz von Baumgarth ausgeführt, versagen diese Verfahren jedoch bei Heizungsanlagen mit Räumen unterschiedlicher Heizlasten (bspw. bei Vorhandensein von Thermostatventilen an den Heizkörpern), weil nicht feststellbar ist, auf welchem Temperaturniveau die benötigte Leistung angefordert wird. Sofern eine sehr exakte Erfassung der Leistung einer Anlage möglich wäre, könnte statt dessen eine an den tatsächlichen Wärmebedarf angepasste Regelung dadurch erreicht werden, dass in bestimmten Zeitabständen eine Änderung der Vorlauftemperatur durchgeführt und das Verhalten der gesamten Heizungsanlage betrachtet wird. Dabei besteht jedoch der Nachteil, dass lediglich eine gemittelte Anpassung der Heizung an die geforderte Leistung möglich ist und extreme Anforderungen mit einer einfachen Lastermittlung noch nicht befriedigt werden können.

Als optimale Lösung wird in dem Aufsatz eine Erfassung der Ventilstellungen jedes Heizkörpers beschrieben, die im Rahmen von Raumtemperaturregelungen mit ansteuerbarem Ventilantrieb möglich ist, weil dann die Vorlauftemperatur der Heizungsanlage nur an dem Raum mit der größten Heizlast angepasst werden muss.

Aus der WO 03/052536 A2 ist ein deutlich verbessertes Verfahren bekannt, das aus den Ventilstellungen, die von einer elektronischen, kommunikationsfähigen Einzelraumregelung erfasst und übertragen werden, eine Korrektur des Sollwertes der Heizungs-Vorlauftemperatur ableitet, indem ein Versorgungszustand des Gebäudes als Regelgröße abgeleitet wird, der zur Adaption der Vorlauftemperatur und/oder des Massenstroms der Heizungsanlage verwendet wird. Dazu können insbesondere die Ventilstellungen der Ventile der Heizkörper erfasst und einer Versorgungszustandsregelung zur Auswertung zugeleitet werden. Hierfür sind jedoch nach wie vor die Installation und der Betrieb einer aufwendigen und teuren kommunikationsfähigen, elektronischen Einzelraumtemperaturregelung und insbesondere die Installation von teuren elektronischen und kommunikationsfähigen Stellgeräten an den Heizkörpern erforderlich. Autarke Einzelraumregelungssysteme ohne Kommunikationsverbund, bspw. herkömmliche Thermostatventile, können keine bedarfsgeführte Führung der Heizungs-Vorlauftemperatur bzw. der Wärmeleistung in der Wärmeerzeugung bzw. in der Wärmeübergabe durchführen, wie auch ausdrücklich in dem Aufsatz von Baumgarth erwähnt. Die Folge der in der Regel hohen Installations- und Wartungskosten elektronischer Einzelraumtemperaturregelungen sind Amortisationszeiten auf Basis der eingesparten Heizenergie von typisch mehr als 7 Jahren. Daher findet in vielen Fällen keine bedarfsgeführte Optimierung der Wärmeleistung von Heizungsanlagen statt, weil es nicht möglich ist, den Versorgungszustand der einzelnen Heizflächen automatisiert zu ermitteln und auszuwerten.

Aus der EP 1 235 131 A2 ist eine Raumtemperaturregelung mit einem ersten Temperaturfühler zur Messung der Raumlufttemperatur, einem zweiten Temperaturfühler zur Messung der Vorlauftemperatur eines Heizmittels und einem dritten Temperaturfühler zur Messung der Rücklauftemperatur des Heizmittels bekannt, aus deren Messwerten die Betriebskennlinie des Ventils ermittelt wird. Auf Basis der Betriebskennlinie werden dann die Regelparameter der Raumtemperaturregelung angepasst. Aus der Betriebskennlinie des Ventils kann der Heizmitteldurchfluss für eine bestimmte Hubstellung genau abgelesen werden. Für die Ermittlung der Betriebskennlinie wird bei jeweils zugehöriger Hubstellung des Ventils aus dem Quotienten der aktuellen Wärmeleistung und der Normwärmeleistung eines Heizkörpers oder einer Fußbodenheizung der Massenstrom bestimmt, wobei die aktuelle Wärmeleistung aus der mittleren Temperaturdifferenz zwischen Vorlauf-, Rücklauf- und Raumlufttemperatur bestimmt wird.

Aufgabe der Erfindung ist es, ein Verfahren der eingangs genannten Art zur Adaption der Wärmeleistung in Fußboden- bzw. Fächenheizungsanlagen einfach durchführen zu können, wobei ohne Erfassung der Hubposition der einzelnen Ventile ein Heizflächen-Versorgungszustand ermittelt werden soll.

Diese Aufgabe wird erfindungsgemäß mit den Merkmalen des Anspruchs 1 gelöst. Dabei ist insbesondere vorgesehen, dass der Heizflächen-Versorgungszustand einer Heizfläche aus einem Heizflächen-Volumenstromwert (nachfolgend auch nur als Volumenstromwert bezeichnet) mittels Kennlinien ermittelt wird. Anstelle gesonderter elektronischer und kommunikationsfähiger Einzelraumregelungen wird bei der erfindungsgemäßen Lösung in einfacher Weise das in vielen Fällen bereits bestehende oder kostengünstig installierbare System kommunikationsfähiger Wärmemengenzähler genutzt, welche die erfassten Volumenstromwerte einer Heizkostenzentrale zur Auswertung übermitteln. Insbesondere ist dieses System der Heizkostenverteiler unabhängig von der Art der Einzelraumregelungen und kann auch bei nicht elektronischen, thermostatisch geregelten Heizungssystem angewendet werden, um eine optimale bedarfsgeführte Adaption der Wärmeleistung zu ermöglichen. Die bedarfsgeführte Adaption der Wärmeleistung ist in der WO 03/052536 A2 der Anmelderin ausführlich beschrieben.

Der Heizflächen-Versorgungszustand ist eine Größe, welche den zusätzlichen positiven oder negativen Leistungsbedarf einer Heizfläche anzeigt. Diese ist insbesondere mit der Hubstellung des Stellventils der Heizfläche oder dem Volumenstrom des durchströmenden Heizmediums korreliert. Ein aufgrund einer Einzelraum-Temperaturregelung weit geöffnetes Ventil, und damit hoher Heizvolumenstrom, zeigt für diesen Raum einen weiteren Heizleistungsbedarf an, der sich bspw. in einem negativen Heizflächen-Versorgungszustand (Unterversorgung) niederschlägt. Umgekehrt zeigt ein weit geschlossenes Ventil, und damit ein geringer Heizvolumenstrom, einen geringeren Heizleistungsbedarf dieser Heizfläche an, welcher sich bspw. in einem positiven Heizflächen-Versorgungszustand (Überversorgung) niederschlägt. Mit der Erfindung ist es möglich, den Heizflächen-Versorgungszustand auch ohne Kenntnis der Hubstellungen der den Heizflächen zugeordneten Heizkörperventilen zu ermitteln, um die Wärmeleistung der gesamten Heizungsanlage mit der Versorgungszustandsregelung so einzuregeln, dass an jeder Heizfläche ein möglichst optimaler Versorgungszustand herrscht. Dazu wird aus Volumenstromwerten auf den Volumenstrom des Heizmediums zurückgeschlossen, der über Kennlinien mit dem Heizflächenversorgungszustand korreliert ist. Vorzugsweise wird der Volumenstrom dabei ins Verhältnis zu dem maximalen Nennvolumenstrom der Heizfläche gesetzt.

Erfindungsgemäß wird zur Ermittlung des Heizflächen-Versorgungszustands der Volumenstrom oder das Volumeninkrement als gemessener Volumenstromwert herangezogen. Solche Volumenstromwerte werden in einem Wärmemengenzähler gemessen, der typischer Weise bei Fußbodenheizungen oder dergleichen Flächenheizungssystemen für die Erfassung der verbrauchten Wärmemenge eingesetzt wird und im Sammelrücklauf der Fußbodenheizungsverteilung installiert sein kann. Ein Wärmemengenzähler erfasst den Volumenstrom oder das Volumeninkrement, die Vor- und Rücklauftemperatur und berechnet daraus typischer Weise die aktuelle Wärmeleistung bzw. das aktuelle Wärmemengeninkrement. Dabei gibt der Wärmemengenzähler den gemessenen Volumenstrom bzw, das Volumeninkrement auch direkt zurück.

Gemäß einer Ausführungsform der Erfindung kann die Kennlinie empirisch ermittelt sein. Dies kann bspw. dadurch erfolgen, dass an einer typischen Heizfläche von Fußbodenheizungen mit einem Ventil bekannter Ventilautorität der Ventilhub eingestellt und diesem über eine bestimmte funktionale, bspw. lineare Abhängigkeit ein Heizflächen-Versorgungszustand zugeordnet wird. Für jede Ventilstellung wird dann der zugehörige Volumenstrom gemessen und dem Heizflächen-Versorgungszustand zugewiesen. Erfindungsgemäß kann die Kennlinie unter Zugrundelegung physikalischer Annahmen und geeigneter Heizkörper-Modelle für das Strömungs- und/oder Temperaturverhalten auch entsprechend parametriert werden, so dass die Kennlinien in der Versorgungszustandsregelung einfach als Funktionen hinterlegt werden können.

Zur Anwendung des Verfahrens zur Adaption der Wärmeleistung in Heizungsanlagen mittels einer Wärmeleistungsregelung der Heizungsanlage, insbesondere durch Variation von Vorlauftemperatur und/oder Massenstrom, wird aus mehreren Heizflächen-Versorgungszuständen von insbesondere zu einem Heizkreis oder Gebäude gehörenden Heizflächen bspw. mit Methoden der Fuzzy-Logik ein Heizkreis-und/oder ein Gebäudeversorgungszustand als Regelgröße für die Versorgungszustandsregelung der Wärmeleistungsregelung bestimmt. Dieser kann vorzugsweise mit einem vorgebbaren Sollwert für den Heizkreis- oder Gebäudeversorgungszustand verglichen und daraus ein Sollwert und/oder Korrekturwert für die Wärmeleistungsregelung ermittelt werden. Dadurch wird erfindungsgemäß eine Leistungsanpassung der zentralen Heizungsversorgung durch Veränderung der Vorlauftemperatur oder des Volumenstromes des flüssigen Wärmeträgers bzw. durch Kombination der Veränderung von Vorlauftemperatur und Volumenstrom mit einer bedarfsabhängigen Regelung erreicht.

Um Regelungsspitzen zu vermeiden, kann aus dem Heizflächen-Versorgungszustand, dem Heizkreis-Versorgungszustand und/oder dem Gebäude-Versorgungszustand ein zeitlich gemittelter Versorgungszustand bestimmt werden, insbesondere mittels zeitlicher Glättung, Anwendung eines zeitdiskreten Filters oder zeitlicher Mittelwertbildung. Die zeitliche Glättung, Filterung oder Mittelwertbildung der Heizflächen-Versorgungszustände erfolgt auch mit dem Ziel, Schwankungen infolge des Arbeitsverhaltens von elektrothermischen AUF-ZU-Antrieben auszugleichen.

Zusätzlich kann der Heizkreis- und/oder der Gebäudeversorgungszustand mit einer Altersgewichtung aus den Heizflächen-Versorgungszuständen ermittelt werden. Durch eine zeitabhängige Altersgewichtung der berücksichtigten Heizflächen-Versorgungszustände können veraltete Heizflächen-Versorgungszustände gleitend aus der Berechnung des Gebäudeversorgungszustands herausgefiltert werden. Dies kann dadurch erreicht werden, dass das zeitliche Alter eines einzelnen Heizflächen-Versorgungszustands ggf. nach Überschreiten eines vorgegebenen Alterswertes relativ zum jüngsten Heizflächen-Versorgungszustand des entsprechenden Heizkreises bzw. Gebäudes ermittelt wird. Entsprechend diesem relativen Alter wird der Heizflächen-Versorgungszustand dann mit einem bspw. von dem relativen Alter linear oder exponentiell abhängenden Altergewichtungsfaktor gewichtet, bspw. durch Multiplikation mit einem Wert zwischen 0 und 1, wobei der Heizflächen-Versorgungszustand bei Überschreiten eines maximalen Alterswertes auch gar nicht mehr berücksichtigt werden kann. Durch die Berücksichtigung des relativen Alters zwischen den einzelnen Versorgungszuständen wird insbesondere erreicht, dass nur repräsentative Werte für die Wärmeleistungsregelung herangezogen werden.

Besonders vorteilhaft ist es, wenn der Sollwert für den Heizflächen-, Heizkreis- oder Gebäudeversorgungszustand einem vorgegebenen Nennvolumenstrom für eine Heizfläche und/oder einer vorgegebenen Hubstellung eines Heizflächenventils entspricht, wie insbesondere durch die DIN EN 215 vorgegeben. Dabei kann der Sollwert eines Heizflächen-Versorgungszustands, der eine optimale Versorgung des Heizkörpers anzeigt, vorzugsweise etwa einer Mittelstellung des Ventilhubs bzw. daraus abgeleiteten Größen, wie Volumenstrom oder Heizflächen-Temperaturwerten, entsprechen. Dann ergibt sich eine gute Regelbarkeit der Raumtemperatur infolge vorhandener positiver oder negativer Stellgrößenreserven an dem Heizkörperventil bzw. Heizleistungsreserven an dem Heizkörper.

Zur Vermeidung von Leistungsspitzen kann der Soll- bzw. Korrekturwert für die Wärmeleistungsregelung, bspw. die Vorlauftemperaturregelung, derart begrenzt werden, dass ein parametrierbarer, zulässiger oberer und/oder unterer Grenzwert nicht über- bzw. unterschritten wird. Eine besondere Ausprägung dieses Merkmals besteht darin, die Grenzwerte, insbesondere den oberen Grenzwert, in Abhängigkeit der Außentemperatur zu führen. Dadurch kann bspw. der Vorlauftemperaturwert abhängig von der Außentemperatur auf bspw. 70 bis 80 °C begrenzt werden. Die Maximalbegrenzung kann dabei auch als Außentemperatur-abhängige Temperaturdifferenz von einer Basis-Heizkennlinie für die Vorlauftemperatur definiert werden. Die vorgeschlagene Begrenzung von Soll- bzw. Korrekturwert hat den Vorteil, dass insbesondere im Bereich niedriger Außentemperaturen ein Überschreiten einer parametrierbaren, zulässigen oberen Leistungsgrenze vermieden wird.

Die Erfindung betrifft ferner einen Versorgungszustandsregler zur Regelung des Versorgungszustands mindestens einer Heizfläche gemäß den Merkmalen des Anspruchs 9, insbesondere nach dem vorbeschriebenen Verfahren. Die Versorgungszustandsregelung weist ein Modul zur Erfassung eines Volumenstromwertes und ein Modul zur Ermittlung des Heizflächen-Versorgungszustands aus dem Heizflächen-Volumenstromwert mittels Kennlinien auf, welche in dem Modul in Form von Wertetabellen hinterlegt sein oder über einen Algorithmus berechnet werden können. Dazu kann die Versorgungszustandsregelung bspw. an ein System zur Heizkostenverteilung angeschlossen sein, welches die benötigten Volumenstromwerte zur Heizleistungserfassung erfasst und auswertet. Der Einfachheit halber kann die Versorgungszustandsregelung bspw. in einer Zentrale des Systems zur Heizkostenverteilung mit integriert sein, in der alle benötigten Temperaturwerte sowie Informationen zu den Heizflächen zur Verfügung stehen.

Es ist erfindungsgemäß auch möglich, das Modul zur Erfassung der Volumenstromwerte und/oder das Modul zur Ermittlung des Heizflächen-Versorgungszustands in eine bspw. elektronische Einzelraumtemperaturregelung zu integrieren. Insbesondere ist das Modul zur Erfassung der Volumenstromwerte ein herkömmlicher Wärmemengezähler. Das Modul kann vorzugsweise eine Bus-Schnittstelle, bspw. eine M-Bus-Schnittstelle, aufweisen, um die ausgelesenen Werte einfach an das Modul zur Ermittlung des Heizflächen-Versorgungszustands zu übertragen. Die Erfindung ist jedoch auch für Wärmemengenzähler mit Impulsschnittstelle umsetzbar.

Erfindungsgemäß muss das Modul zur Erfassung der Volumenstromwerte nicht unmittelbar mit dem Modul zur Ermittlung des Heizflächen-Versorgungszustands bspw. über Funk kommunizieren. Dies würde in der Regel einen hohen funktechnischen Aufwand bedeuten, da die Funkreichweiten in Gebäuden eingeschränkt sind und bspw. mit Repeatern gearbeitet werden müsste. Daher kann erfindungsgemäß vorgesehen werden, dass das Modul zur Ermittlung des Heizflächen-Versorgungszustands an eine Zentrale der Verbrauchswerterfassung angeschlossen ist, in der alle benötigten Messdaten für die Ermittlung der einzelnen Heizflächen-Versorgungszustände zur Verfügung stehen. Diese Kommunikation kann als Funk- oder drahtgebundene Kommunikation ausgeführt werden.

Die Versorgungszustandsregelung kann in eine Wärmeleistungsregelung zur Vorgabe einer Vorlauftemperatur und/oder eines Massenstroms einer Heizungsanlage integriert sein. Dazu weist die Versorgungszustandsregelung oder -die Wärmeleistungsregelung eine geeignete Schnittstelle zu der Heizungsanlage, bspw. zu der Kesselsteuerung, auf, um einen geeigneten Sollwert für die Kesselregelung als Führungssignal oder Korrektursignal zu einem anders erzeugten, bspw. außentemperaturabhängigen Führungssignal zu erzeugen.

Weitere Merkmale, Vorteile und Anwendungsmöglichkeiten der Erfindung ergeben sich auch aus der nachfolgenden Beschreibung von Ausführungsbeispielen und der Zeichnung.

Es zeigen:
- Fig. 1: einen Signalflussplan für die Durchführung eines Verfahrens zur Bestimmung eines Heizkreis- oder Gebäudeversorgungszustands mit einer 3-Fühler-Messeinrichtung, welches Gegenstand einer Teilanmeldung ist;
- Fig. 2: einen Signalflussplan für die Durchführung eines weiteren Verfahrens zur Bestimmung eines Heizkreis- oder Gebäudeversorgungszustands mit einer 3-Fühler-Messeinrichtung, welches Gegenstand einer Teilanmeldung ist;
- Fig. 3: einen Signalflussplan für die Durchführung eines weiteren Verfahrens zur Bestimmung eines Heizkreis- oder Gebäudeversorgungszustands mit einer 2-Fühler-Messeinrichtung, welches Gegenstand einer Teilanmeldung ist;
- Fig. 4: einen Signalflussplan für die Durchführung des erfindungsgemäßen Verfahrens mit einer Messeinrichtung zur Bestimmung des Volumenstroms;
- Fig. 5: einen Signalflussplan für die Durchführung eines weiteren, nicht erfindungsgegenständlichen Verfahrenszur Bestimmung eines Heizkreis- oder Gebäudeversorgungszustands mit einer Messeinrichtung zur Bestimmung der Wärmeleistung;
- Fig. 6a, b: Kennlinien Heizflächenversorgungszustand gegen Volumenstromverhältnis;
- Fig. 7a, b: Kennlinien Heizflächenversorgungszustand gegen Heizkörpertemperatur;
- Fig. 8a, b: Kennlinien Heizflächenversorgungszustand gegen Heizkörperleistung;
- Fig. 9: eine Kennlinie Volumenstrom gegen Ventilhub für verschiedene Ventilautoritäten;
- Fig. 10: eine Kennlinie Heizkörperleistung gegen Ventilhub für verschiedene Ventilautoritäten;
- Fig. 11: herkömmliche lineare und nichtlineare Heizungsfahrkurven und
- Fig. 12: eine Kennlinie Versorgungszustand gegen Heizleistungsbedarf.

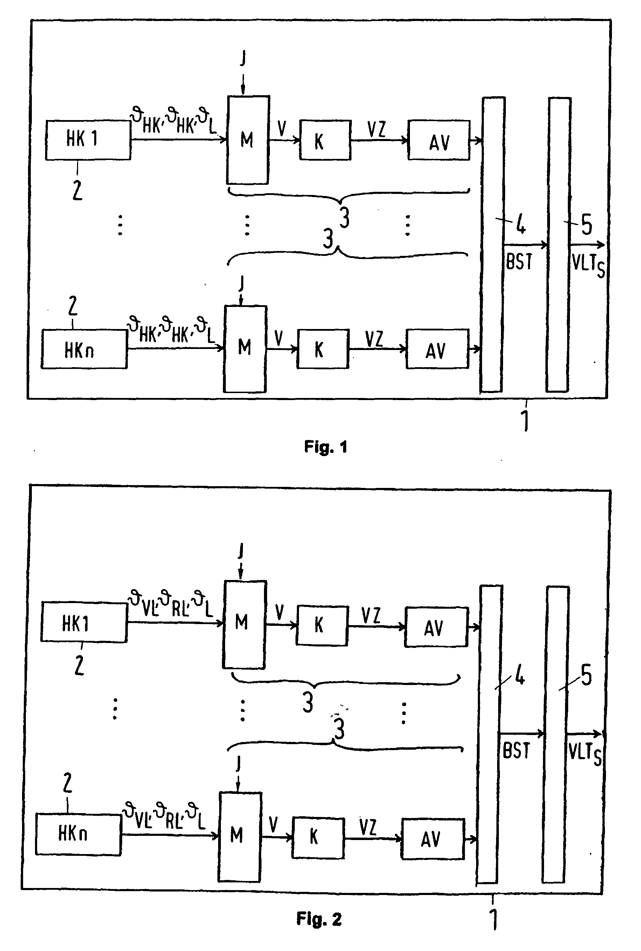

Fig. 1 stellt schematisch den Ablauf der Ermittlung der Heizflächen-Versorgungszustände im Zusammenhang mit einem Verfahren zur Adaption der Wärmeleistung in Heizungsanlagen mittels einer Wärmeleistungsregelung mit einer Versorgungszustandsregelung dar, welche ein Wärmeleistungsadaptionsmodul 1 aufweist, in dem aus Temperaturwerten der Heizflächen ein Gebäudeversorgungszustand BST ermittelt und daraus ein Sollwert und/oder ein Korrekturwert VLTₛ für die Wärmeleistungsregelung ermittelt wird.

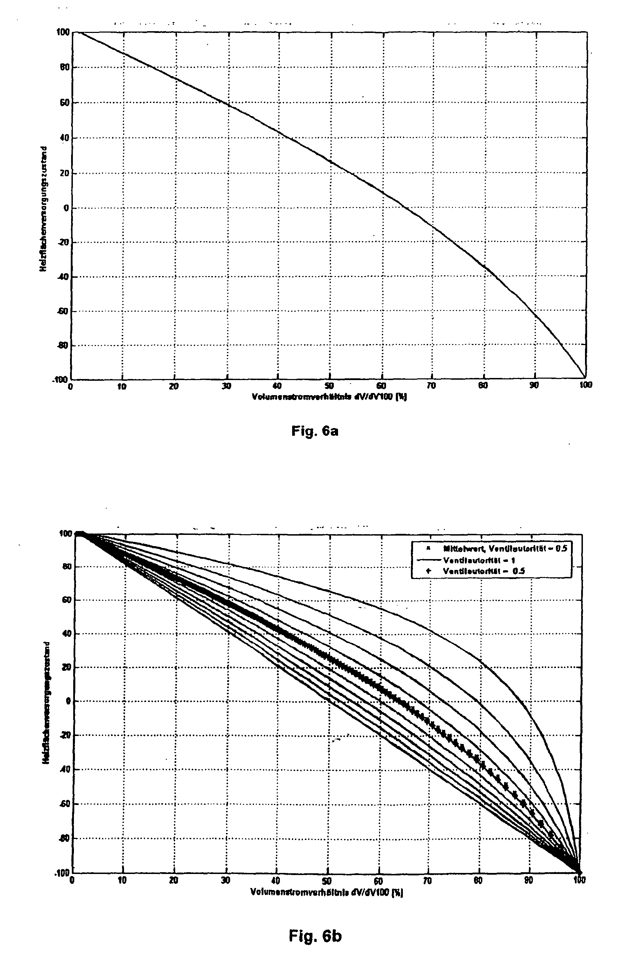

Das Wärmeleistungsadaptionsmodul 1 weist ein Modul 2 zur Erfassung der Heizkörper-Umgebungslufttemperatur ϑ_{L} und zwei Heizkörperoberflächentemperaturen ϑ_{HK} auf. Das Modul 2 kann bspw. eine herkömmliche 3-Fühler Messeinrichtung eines elektronischen Heizkostenverteilers sein. In dem Modul 2 werden aus den zwei Heizkörperoberflächentemperaturwerten ϑ_{HK} durch Differenzbildung mit der Heizkörper-Umgebungslufttemperatur ϑ_{L} sogenannte Heizköper-Übertemperaturen gebildet. Zusammen mit weiteren Kenngrößen J des Heizkörpers bzw. der Heizfläche, insbesondere der Position der Temperaturmesspunkte, wie bspw. den relativen senkrechten Abständen der Temperaturmesspunkte zum Vorlaufanschluss, Nenngrößen im Auslegungspunkt, wie bspw. Nennleistung, -vorlauftemperatur, -rücklauftemperatur, -volumenstrom, oder dgl., wird aus diesen Temperaturwerten mit einem auf den physikalischen Gesetzmäßigkeiten basierenden, parametrierbaren mathematischen Heizkörpermodell M der aktuelle Volumenstrom VS des Heizkörpers ermittelt, bspw. als Volumenstromverhältnis V relativ zu dem maximalen Nennvolumenstrom. Aus diesem kann mit der Kennlinie K aus Fig. 6a, die den Heizflächenversorgungszustand VZ als Funktion des Volumenstromverhältnisses V für eine mittlere Ventilautorität 0,5 zeigt, der Heizflächen-Versorgungszustand VZ ermittelt werden. Die Variationsbreite des Kennlinienverlaufs für Ventile mit Ventilautoritäten zwischen 0,1 und 1 ist Fig. 6b zu entnehmen.

Nach Ermittlung des aktuellen Heizflächen-Versorgungszustands VZ wird in einem Mittlungsmodul AV ein mittlerer Heizflächen-Versorgungszustand generiert, um kurzfristige Schwankungen bspw. bei einem Ventiltest eines elektronisch verstellbaren Heizkörperventils, bei Verwendung von elektrischen AUF-ZU-Antrieben oder eines manuell verstellbaren Thermostatventils regelungstechnisch nicht zu stark zu bewerten bzw. auszugleichen. Dies kann in dem Mittlungsmodul AV durch zeitliche Glättung, mittels Anwendung eines zeitdiskreten Filters oder durch zeitliche Mittelwertbildung erfolgen.

Die wie vorbeschrieben für eine Vielzahl von Heizkörpern HK1 bis HKn ermittelten Heizflächen-Versorgungszustände VZ werden mit der Bewertungslogik eines Versorgungszustandsanalysators 4 bewertet, die bspw. mit Methoden der Fuzzy-Logik, wie in der WO 03/052536 A2 beschrieben, aus den jeweiligen Heizflächen-Versorgungszuständen VZ einen Gebäudeversorgungszustand BST generiert und an ein Versorgungszustandsadaptionsmodul 5 mit einer Optimierungslogik weiterleitet, um den Sollwert und/oder Korrekturwert VLTₛ für die Wärmeleistungsregelung zu bestimmen und auszugeben.

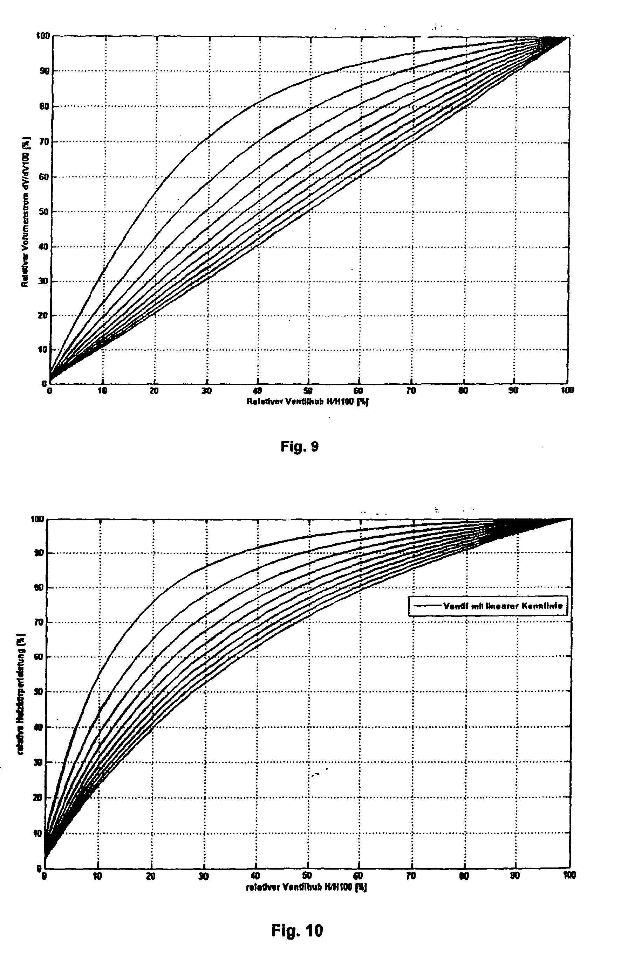

Dabei wird die Vorlauftemperatur und/oder der Massenstrom der Heizungsanlage vorzugsweise derart eingestellt, dass an jeder der Heizflächen ein definierter Nennvolumenstrom bzw. damit korrespondierend eine definierte Hubstellung der Heizflächenventile im mittleren Stellbereich eingestellt ist (vgl. Fig. 6a, 6b), um eine gute Regelbarkeit der einzelnen Heizflächen bzw. Räume zu erreichen. Durch die Optimierungslogik wird erreicht, dass dieser auch gemäß DIN EN 215 definierte Zustand an allen Heizflächen möglichst weitgehend angenähert wird. Insbesondere wird darauf geachtet, dass der Arbeitspunkt auf der Kennlinie des Heizkörperventils bzw. der Heizfläche oberhalb des regelungstechnisch kritischen Schließbereichs liegt. Ferner soll der Arbeitspunkt auf der Kennlinie der Heizfläche unterhalb des regelungstechnisch kritischen Bereichs einer gesättigten Heizkörperleistung liegen. Typische Kennlinien hierfür sind für verschiedene Ventilautoritäten in den Fig. 9 und 10 dargestellt.

Der für die Bildung des Volumenstromverhältnisses V benötigte maximale Nennvolumenstrom kann aus Heizkörperauslegungsdaten, insbesondere der Nennwärmeleistung, der Nennvorlauf- und -rücklauftemperatur, bestimmt werden. Wenn diese in der Praxis nicht bekannt sind, sieht das Verfahren vor, den jeweils maximalen ermittelten Volumenstrom ggf. nach einer Plausibilitätsprüfung als maximalen Nennvolumenstrom zu speichern und zu verwenden. Dieser so nach dem Schleppzeigerprinzip ermittelte maximale Nennvolumenstrom kommt nach einer gewissen Betriebsdauer dem maximalen Nennvolumenstrom, der aus den Ausführungs- oder Planungsunterlagen des Heizungssystems entnommen werden kann, für die praktische Anwendung ausreichend nahe. Dieses Verfahrensmerkmal erleichtert den Einsatz der vorgeschlagenen Wärmeleistungsregelung insbesondere bei bereits bestehenden Installationen, für die gewisse Nenndaten häufig nicht mehr einfach verfügbar sind.

Fig. 2 stellt eine Variante des Verfahrens mit einer 3-Fühler-Messung dar, bei der mit dem Modul 2 die Vorlauftemperatur ϑ_{VL} und die Rücklauftemperatur ϑ_{RL} zusammen mit der Heizkörper-Umgebungslufttemperatur ϑ_{L} unmittelbar am Heizkörperanschluss gemessen wird. In diesem Fall müssen bei der Bestimmung des Heizflächen-Versorgungszustands in dem Modul 3 weniger Annahmen bzgl. des Heizkörpermodells gemacht werden. Im Übrigen läuft das Verfahren in analoger Weise ab wie bei der 3-Fühler-Messung gemäß Fig. 1. Insoweit werden in Fig. 2 auch dieselben Bezugszeichen verwendet und es wird auf eine detaillierte Beschreibung des Verfahrensablaufs verzichtet.

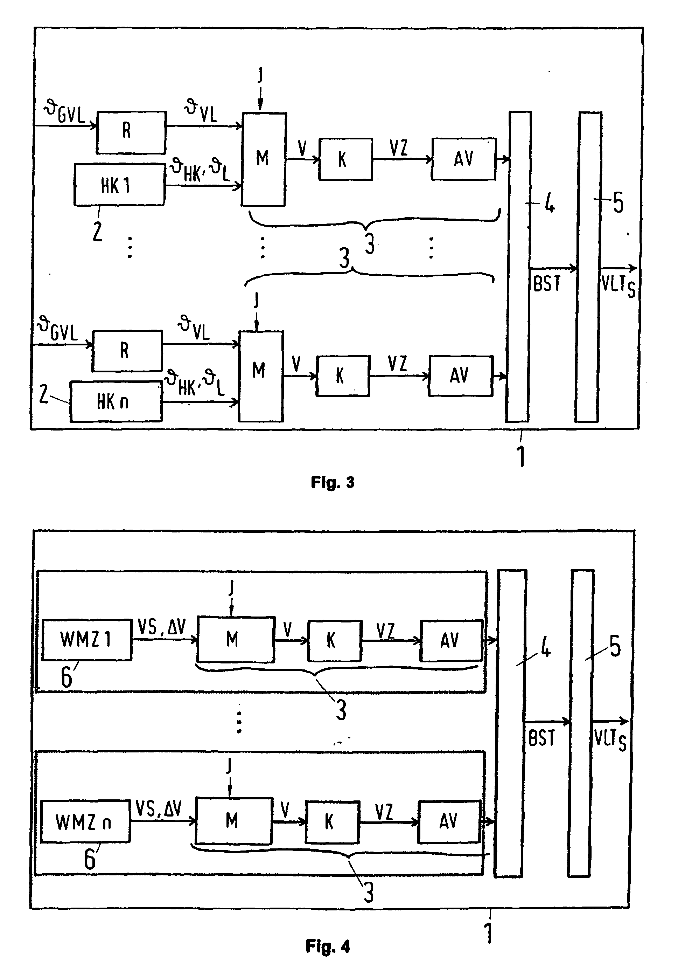

In Fig. 3 ist die Umsetzung des Verfahrens gemäß einer Variante mit einer 2-Fühler-Messung dargestellt, bei der an der Heizfläche nur eine Heizkörperoberflächentemperatur ϑ_{HK} und die Heizkörper-Umgebungslufttemperatur ϑ_{L} gemessen werden. Die für die Bestimmung des Heizflächen-Versorgungszustands VZ benötigte Heizkörpervorlauftemperatur ϑ_{VL} wird aus der bspw. einmal zentral gemessenen Vorlauftemperatur der Heizungsanlage ϑ_{GVL} mittels eines Rohrmodells R zum Vorlauftemperaturverlust in dem Rohrsystem abgeschätzt. Die Messung der Vorlauftemperatur ϑ_{GVL} der Heizungsanlage kann (auch mehrmals) an beliebigen Zwischenpunkten zwischen dem Eintritt des Heizungsmedium in das Gebäude und dem Heizkörper / der Heizfläche gemessen werden. Als wesentlicher Parameter geht in das Rohrmodell R die Entfernung zwischen dem Messort der Vorlauftemperatur und der Heizfläche ein. Aufgrund dieser Vereinfachung des Messsystems ist diese Variante auch für 2-Fühler-Messsysteme geeignet, bei denen nur ein Heizflächen-Temperaturwert, bspw. eine Heizkörperoberflächentemperatur ϑ_{HK}, und die Heizkörper-Umgebungslufttemperatur ϑ_{L} mit dem Modul 2 gemessen werden. Im Weiteren entspricht der Verfahrensablauf dem in den Fig. 1 oder 2 beschriebenen Verfahren, so dass auf eine genauere Erläuterung verzichtet wird.

Fig. 4 beschreibt die Anwendung des erfindungsgemäßen Verfahrens bei Flächenheizungssystemend.h. einer Fußbodenheizung. Dort werden häufig im Sammelrücklauf der Fußbodenheizung eingesetzte Wärmemengenzähler WMZ als Modul 6 zur Erfassung von Volumenstromwerten verwendet, die den Volumenstrom VS oder das pro Zeitintervall erfasste Volumenstrominkrement ΔV messen. Diese werden in einem Heizkörper- bzw. -flächenmodell M mit weiteren Parametern J, insbesondere dem maximalen Nennvolumenstrom, ins Verhältnis gesetzt, um das Volumenstromverhältnis V zu bestimmen. Die weitere Bestimmung der Heizflächen-Versorgungszustände VZ und des Sollwerts VLTₛ verläuft anlog zu den vorbeschriebenen Ausführungsvarianten gemäß den Fig. 1 bis 3, so dass hier auf die vorstehende Beschreibung Bezug genommen wird.

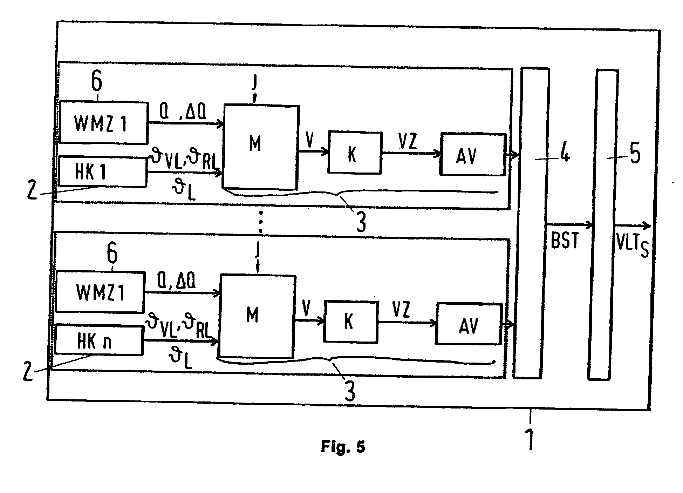

Häufig geben Wärmemengenzähler WMZ auch nur die ermittelte Wärmeleistung Q bzw. ein pro Zeitintervall erfasstes Wärmemengeninkrement ΔQ aus. In diesem Fall kann aus der Wärmeleistung Q oder dem Wärmemengeninkrement ΔQ unter Berücksichtigung der Vorlauftemperatur ϑ_{VL}, der Rücklauftemperatur ϑ_{RL} und der Enthalpie des Heizkörpermediums auf das Volumenverhältnis zurückgerechnet werden. Diese Verfahrensvariante ist in Fig. 5 dargestellt. Dort liefert ein Wärmemengenzähler WMZ im Modul 6 die Wärmeleistung Q oder das Wärmemengeinkrement ΔQ an das Heizkörpermodell M. Um daraus auf das Volumenstromverhältnis rückschließen zu können, werden zusätzlich mit einem Temperaturmessgerät im Modul 2 Heizflächen-Temperaturwerte ϑ_{VL}, ϑ_{RL} sowie ggf. ϑ_{L} erfasst und an das Heizkörpermodell M weitergeleitet, das hieraus mittels weiterer benötigter Kenngrößen J der Heizungsanlage das Volumenstromverhältnis V ermittelt, das dann wie bekannt weiter verarbeitet wird.

Ein Wärmemengenzähler WMZ kann als einfachste Ausführungsform ein Volumenmessgerät mit einem Impulsausgang sein, das ein Volumeninkrement als Ausgangsgröße oder ein Wärmemengeinkrement weitergibt. Im Falle eines Wärmemengenzählers WMZ mit einer insbesondere Bus-fähigen Kommunikationsschnittstelle kann der Wärmemengenzähler auch ein integrierteres Temperaturmessgerät aufweisen und mehrere verschiedene Messwerte an das Heizkörpermodell M zur Verarbeitung weiterleiten.

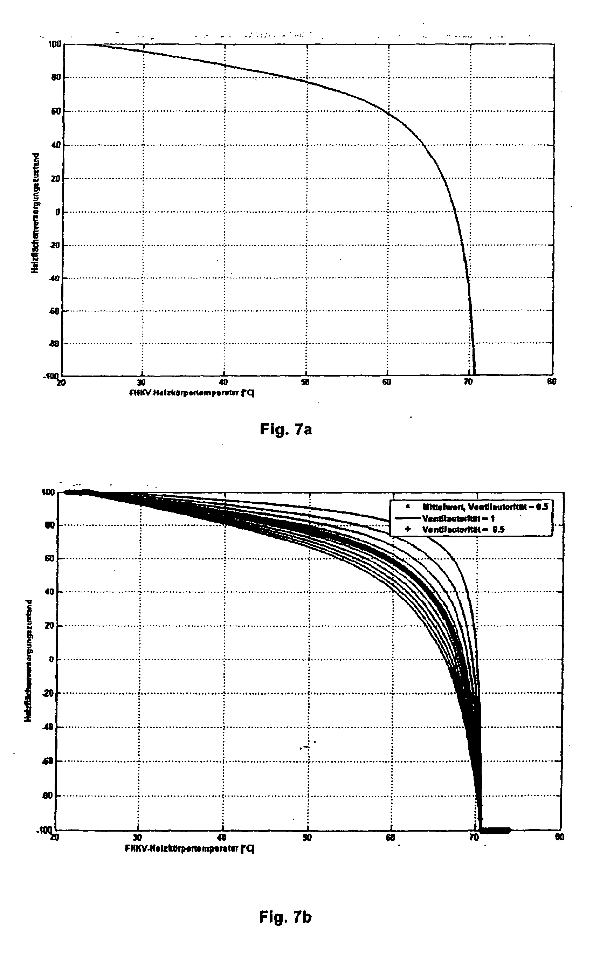

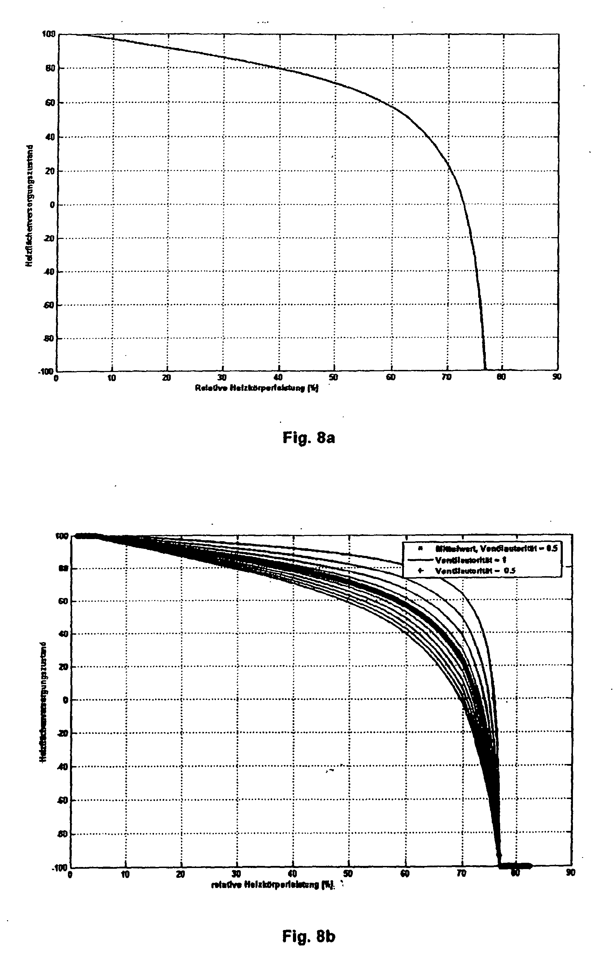

Die in den Fig. 7a und Fig. 8a dargestellten Kennlinien zeigen die Abhängigkeit des Heizflächen-Versorgungszustands VZ gegen die Heizkörpertemperatur oder die relative Heizkörperleistung jeweils bei einer Ventilautorität 0,5 für eine Heizkörper-Umgebungstemperatur ϑ_{L} von 20°C und eine typische Vorlauftemperatur ϑ_{VL} von 75°C. In den Fig. 7b und Fig. 8b ist die Variationsbreite der Kennlinien für Ventilautoritäten zwischen 0,1 und 1 dargestellt.

Nachfolgend werden die Grundverfahrensschritte für das Verfahren zur Adaption der Wärmeleistung von Heizungsanlagen im Kontext des Gesamtverfahrens noch einmal detailliert erläutert.

Das vorgeschlagene Verfahren zur bedarfsgeführten Führung der Heizungsanlagen-Vorlauftemperatur ϑ_{GVL} bzw. der Wärmeleistung in der Wärmeerzeugung (Heizkessel) oder in der Wärmeübergabe (Fernwärme) eignet sich für den Einsatz einer dem Stand der Technik entsprechenden thermostatischen Einzelraumtemperaturregelung (Stellventil mit Thermostatkopf) zur Regelung der Raumtemperatur in Heizungsanlagen mit flüssigem Wärmetransportmedium (z.B. Wasser). Alternativ kann das Verfahren auch in Heizungsanlagen mit einer elektronischen Einzelraumtemperaturregelung zur Regelung der Raumtemperatur mittels Drosselung des Heizkörper- bzw. Heizflächenvolumenstromes Anwendung finden, wobei die Einzelraumtemperaturregelung autark arbeiten kann und ohne Kommunikationsverbund auskommt.

Um eine Adaption der erzeugten Wärmeleistung zu erreichen, wird für jeden Heizkörper bzw. jede Heizfläche mit thermostatischer oder elektronischer Einzelraumtemperaturregelung eine Kenngröße Versorgungszustand VZ abgeleitet, die indirekt proportional zum aktuellen zusätzlichen Leistungsbedarf des Heizkörpers/ der Heizfläche ist, d.h. ein negativer Wert für den Versorgungszustand VZ (Unterversorgung) entspricht einem positiven zusätzlichen Leistungsbedarf und ein positiver Wert für den Versorgungszustand VZ (Überversorgung) entspricht einem negativen zusätzlichen Leistungsbedarf. Bei einem Versorgungszustand VZ = 0 besteht kein zusätzlicher Leistungsbedarf, sondern eine ausgeglichene Wärmebilanz. Der Heizflächen-Versorgungszustand VZ kann aus dem Drosselungszustand des Ventils oder (direkt oder indirekt) aus dem Volumenstrom des Heizkörpers/ der Heizfläche ermittelt werden, der wie vorbeschrieben aus verschiedenen Heizflächen-Temperaturwerten und/oder Volumenstromwerten abgeleitet werden kann.

Für die Volumenstrommessung werden die vorbeschriebenen Wärmemengenzähler WMZ eingesetzt.

Aus den o.g. Volumenstromwerten VS, ΔV wird das aktuelle Heizkörper-Volumenstromverhältnis V zu einem maximalen Nennvolumenstrom auf Basis eines parametrierbaren mathematischen Heizkörpermodells M bestimmt.

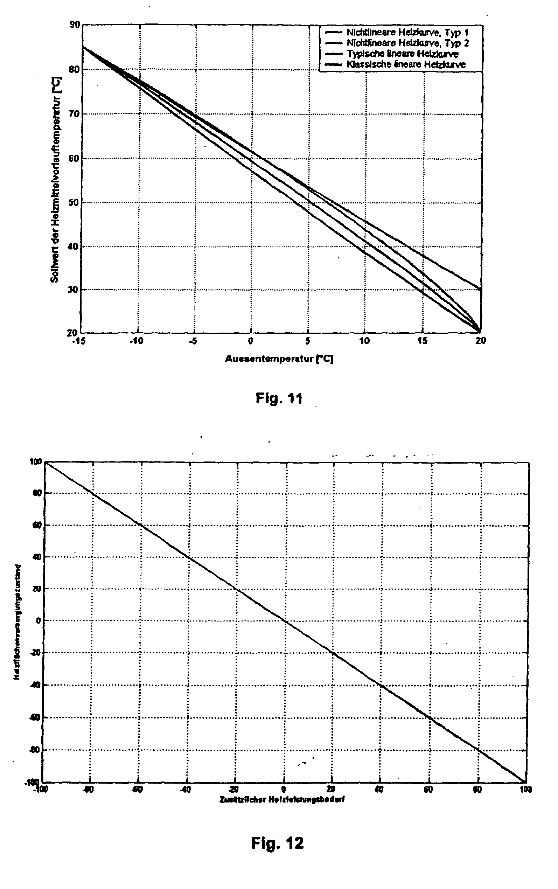

Abweichungen von dem angestrebten Soll-Heizkörper-Versorgungszustand werden zahlenmäßig bspw. entsprechend der Kennlinie gemäß Fig. 12 bewertet, mit negativen Werten für Unterversorgungszustände, denen (zu) große Heizkörpervolumenströme bzw. (zu) geringe Heizleistungsreserven entsprechen, und mit positiven Werten für Überversorgungszustände, denen (zu) kleine Heizkörpervolumenströme bzw. (zu) hohe Heizleistungsreserven entsprechen.

Die aktuellen Heizflächen-Versorgungszustände VZ werden dann in (zeitlich) gemittelte Heizflächen-Versorgungszustände VZ überführt und an einen Versorgungszustandsanalysator 4 mit einer Bewertungslogik übergeben, die aus den Heizflächen-Versorgungszuständen VZ einen Heizkreis- und/oder Gebäudeversorgungszustand BST generiert, bspw. mit Methoden der Fuzzy-Logik, wobei auch der Heizkreis- oder Gebäudeversorgungszustand BST (zeitlich) gemittelt werden kann.

Der Heizkreis- und/oder Gebäudeversorgungszustand BST wird an ein Versorgungszustandsadaptionsmodul 5 mit einer Optimierungslogik übertragen, die daraus die Heizungs-Vorlauftemperatur bzw. deren Korrektur oder den Volumenstrom bzw. dessen Korrektur oder die Wärmeleistung bzw. deren Korrektur ermittelt und als Sollwert VLTₛ an die Regeleinrichtung der Wärmeerzeugung oder der Wärmeübergabe überträgt.

Mit der Erfindung können daher die Vorteile einer Adaption der Wärmeleistung einer Heizungsanlage genutzt werden, indem aus dem Drosselungszustand eines Heizkörpers bzw. einer Heizfläche, der in direkter Beziehung zum Volumenstrom der Heizfläche steht und der durch eine Stelleinrichtung einer Einzelraumtemperaturregelung erzeugt wird, auf den zusätzlichen Wärmebedarf bzw. auf den Versorgungszustand VZ der Heizfläche geschlossen wird. Der Betriebszustand einer Heizfläche und insbesondere auch sein Volumenstrom kann mit entsprechenden Wärmemengenzählern WMZ erfasst werden. Daher lässt sich die Erfindung in einfacher Weise auch bei bspw. thermostatischen Einzelraumtemperaturregelungen anwenden.

### Bezugszeichenliste:

- 1: Wärmeleistungsadaptionsmodul
- 2: Modul zur Erfassung von Heizflächen-Temperaturwerten
- 3: Modul zur Ermittlung des Heizflächen-Versorgungszustands
- 4: Versorgungszustandsanalysator
- 5: Versorgungszustandsadaptionsmodul
- 6: Modul zur Erfassung von Volumenstromwerten

- ϑ_{L}: Heizkörper- bzw. Heizflächen-Umgebungslufttemperatur
- ϑ_{HK}: Heizkörper- bzw. Heizflächenoberflächentemperatur
- ϑ_{VL}: Heizkörper- bzw. Heizflächenvorlauftemperatur
- ϑ_{RL}: Heizkörper- bzw. Heizflächenrücklauftemperatur
- ϑ_{GVL}: Vorlauftemperatur der Heizungsanlage
- J: Kenngrößen des Heizkörpers
- K: Kennlinie
- V: Volumenstromverhältnis
- VS: Volumenstrom
- VZ: Heizflächen-Versorgungszustand
- M: Heizkörper- bzw. -flächenmodell
- R: Rohrmodell
- AV: Mittlungsmodul
- VLTₛ: Sollwert und/oder Korrekturwert für die Wärmeleistungsregelung
- BST: Heizkreis- oder Gebäudeversorgungszustand
- HK: Heizkörper bzw. Heizfläche
- WMZ: Wärmemengenzähler

## Patentansprüche

1. Verfahren zur Bestimmung eines Heizkreis- oder Gebäudeversorgungszustands (BST) als Regelgröße für eine Versorgungszustandsregelung zur Ermittlung eines Soll- oder Korrekturwertes (VLTₛ) für eine Wärmeleistungsregelung einer Fußbodenheizung zur Vorgabe einer Vorlauftemperatur und/oder eines Massenstroms einer Heizungsanlage, wobei die Bestimmung des Heizkreis- oder Gebäudeversorgungszustands (BST) aus mehreren Heizflächen-Versorgungszuständen (VZ) von zu einem Heizkreis oder Gebäude gehörenden Heizflächen erfolgt, **dadurch gekennzeichnet, dass** der Heizflächen-Versorgungszustand (VZ) einer Heizfläche aus einem Heizflächen-Volumenstromwert (VS, ΔV) mittels einer Kennlinie (K) ermittelt wird, wobei der Heizflächen-Volumenstromwert der Volumenstrom (VS) oder das Volumeninkrement (ΔV) eines Wärmemengenzählers (WMZ) ist.

2. Verfahren nach Anspruch 1, **dadurch gekennzeichnet, dass** die Kennlinie (K) empirisch ermittelt ist.

3. Verfahren nach einem der Ansprüche 1 oder 2, **dadurch gekennzeichnet, dass** die Kennlinie (K) parametriert und als Funktion hinterlegt ist.

4. Verfahren nach einem der vorhergehenden Ansprüche, **dadurch gekennzeichnet, dass** die Versorgungszustandsregelung den Heizkreis- oder Gebäudeversorgungszustand (BST) mit einem vorgebbaren Sollwert für den Heizkreis- oder Gebäudeversorgungszustand vergleicht und daraus der Sollwert oder Korrekturwert (VLTₛ) für die Wärmeleistungsregelung ermittelt wird.

5. Verfahren nach einem der vorhergehenden Ansprüche, **dadurch gekennzeichnet, dass** dem Heizflächen-Versorgungszustand (VZ), dem Heizkreis- oder dem Gebäudeversorgungszustand (BST) ein zeitlich gemittelter Versorgungszustand zugeordnet wird, insbesondere mittels zeitlicher Glättung, Anwendung eines zeitdiskreten Filters oder zeitlicher Mittelwertbildung.

6. Verfahren nach einem der vorhergehenden Ansprüche, **dadurch gekennzeichnet, dass** der Heizkreis- oder der Gebäudeversorgungszustand (BST) mit einer Altersgewichtung aus den Heizflächen-Versorgungszuständen (VZ) ermittelt wird.

7. Verfahren nach Anspruch 4, **dadurch gekennzeichnet, dass** der Sollwert für den Heizkreis- oder Gebäudeversorgungszustand (BST) einem vorgegebenen Nennvolumenstrom einer Heizfläche und/oder einer vorgegebenen Hubstellung eines Heizflächenventils entspricht.

8. Verfahren nach einem der vorhergehenden Ansprüche, **dadurch gekennzeichnet, dass** für den Sollwert oder Korrekturwert (VLTₛ) für die Wärmeleistungsregelung ein oberer und unterer Grenzwert vorgegeben wird, wobei der obere und/oder der untere Grenzwert von der Außentemperatur abhängen können.

9. Versorgungszustandsregler zur Regelung eines Heizkreis- oder Gebäudeversorgungszustands (BST) mit einem Wärmeleistungsadaptionsmodul (1), in welchem aus Versorgungszuständen (VZ) der Heizflächen eines Heizkreises oder Gebäudes der Heizkreis- oder Gebäudeversorgungszustand (BST) und daraus ein Soll- oder Korrekturwert (VLTₛ) für eine Wärmeleistungsregelung einer Fußbodenheizung ermittelt wird, wobei die Wärmeleistungsregelung eine Vorlauftemperatur und/oder einen Massenstrom einer Heizungsanlage vorgibt, **gekennzeichnet durch** einen Wärmemengenzähler (6) zur Erfassung eines Heizflächen-Volumenstromwertes (VS, ΔV) und ein Modul (3) zur Ermittlung des Heizflächen-Versorgungszustands (VZ) einer Heizfläche aus dem Heizflächen-Volumenstromwert (VS, ΔV) mittels einer Kennlinie (K), wobei der Wärmemengenzähler (6) Teil eines Systems zur Heizkostenverteilung ist, welches die Heizflächen-Volumenstromwerte (VS, ΔV) zur Heizleistungserfassung erfasst und auswertet.

10. Versorgungszustandsregler nach Anspruch 9, **dadurch gekennzeichnet, dass** der Wärmemengenzähler (6) zur Erfassung des Heizflächen-Volumenstromwertes (VS, ΔV) und/oder das Modul (3) zur Ermittlung des Heizflächen-Versorgungszustands (VZ) in eine Einzelraumtemperaturregelung integriert ist.

## Claims

1. A method for detecting a heating circuit or building supply state (BST) as control parameter for a supply state control system for determining a set value or correction value (VLTₛ) for a thermal output control of a floor heating system for the definition of a flow temperature and/or a mass flow of a heating installation, wherein the detecting of the heating circuit or building supply state (BST) is carried out from a plurality of heating area supply states (VZ) of a heating area belonging to a heating circuit or a building, **characterized in that** the heating area supply state (VZ) of a heating area is determined from a heating area volume flow value (VS, ΔV) by means of a characteristic curve (K), wherein the heating area volume flow value is the volume flow (VS) or the volume increment (ΔV) of a heat meter (WMZ).

2. The method according to claim 1, **characterized in that** the characteristic curve (K) is determined empirically.

3. The method according to any one of the claims 1 or 2, **characterized in that** the characteristic curve (K) is parameterized and stored as a function.

4. The method according to any one of the preceding claims, **characterized in that** the supply state control system (BST) compares the heating circuit or building supply state with a predefined set value for the heating circuit or building supply state, and from there the set value or the correction value (VLTₛ) for the thermal output control is determined.

5. The method according to any one of the preceding claims, **characterized in that** to the heating circuit supply state (VZ) or the building supply state (BST), a time-averaged supply state is allocated, in particular by means of time-smoothening, use of a time-discrete filter, or time-averaging.

6. The method according to any one of the preceding claims, **characterized in that** the heating circuit or the building supply state (BST) is determined with an age-weighting from the heating area supply states (VZ).

7. The method according to claim 4, **characterized in that** the set value for the heating circuit or building supply state (BST) corresponds to a predefined nominal volume flow of a heating area and/or a predefined stroke position of a heating area valve.

8. The method according to any one of the preceding claims, **characterized in that** for the set value or the correction value (VLTₛ) for the thermal output control, an upper and a lower limit value is predefined, wherein the upper and/or lower limit value can depend on the outside temperature.

9. A supply state controller for controlling a heat circuit or building supply state (BST) comprising a thermal output adaption module (1), in which from supply states (VZ) of the heating areas of a heating circuit or a building, the heating circuit or building supply state (BST), and therefrom a set or correction value (VLTₛ) for a thermal output control system of a floor heating is determined, wherein the thermal output control system predefines a flow temperature and/or a mass flow of a heating installation, **characterized by** a heat meter (6) for recording a heating area volume flow value (VS, ΔV) and a module (3) for determining the heating area supply state (VZ) of a heating area from the heating area volume value (VS, ΔV) by means of a characteristic curve (K), wherein the heat meter (6) is part of a system for heating cost distribution, which records and evaluates the heating volume flow values (VS, ΔV) for the heating output recording.

10. The supply state controller according to claim 9, **characterized in that** the heat meter (6) for recording the heating area volume flow value (VS, ΔV) and/or the module (3) for determining the heating area supply state (VZ) is integrated in an individual room temperature control system.

## Revendications

1. Procédé de détermination d'un état d'alimentation (BST) d'un immeuble ou d'une circuit de chauffage comme grandeur de régulation en vue d'une régulation de l'état d'alimentation afin de communiquer une valeur de consigne ou de correction (VLTₛ) en vue d'une régulation de la puissance thermique pour prescrire une température aller et/ou un courant de masse d'une installation de chauffage, moyennant quoi la détermination de l'état d'alimentation (BST) de l'immeuble ou du circuit de chauffage est effectuée à partir de plusieurs états d'alimentation de surfaces chauffantes (VZ) de surfaces chauffantes appartenant à un immeuble ou un circuit de chauffage, **caractérisé en ce que** l'état d'alimentation de surface chauffante (VZ) d'une surface chauffantes est déterminé à partir d'une valeur de courant volumique de surface chauffante (VS, ΔV) au moyen d'une courbe caractéristique (K), moyennant quoi la valeur de courant volumique de surfaces chauffante est le courant volumique (VS) ou l'incrément de volume (ΔV) d'un compteur de proportion de chaleur (WMZ).

2. Procédé selon la revendication 1, **caractérisé en ce que** la courbe caractéristique (K) est déterminée empiriquement.

3. Procédé selon une des revendications 1 ou 2, **caractérisé en ce que** la courbe caractéristique (K) est paramétrée et déposée comme une fonction.

4. Procédé selon une des revendications précédentes, **caractérisé en ce que** la régulation de l'état d'alimentation (BST) d'immeuble ou de circuit de chauffage est comparée avec une valeur de consigne prescriptible de l'état d'alimentation d'immeuble ou de circuit de chauffage et, à partir de cela, la valeur de consigne ou la valeur de correction (VLTs) en vue de la régulation de puissance thermique est déterminée.

5. Procédé selon une des revendications précédentes, **caractérisé en ce que** une moyenne temporelle de l'état d'alimentation est affectée à l'état d'alimentation de surface chauffante (VZ), à l'état d'alimentation d'immeuble ou de circuit de chauffage (BST), notamment au moyen d'un lissage temporel, en utilisant un filtre à temps discret ou une formation de valeurs moyennes temporelles.

6. Procédé selon une des revendications précédentes, **caractérisé en ce qu** l'état d'alimentation d'immeuble ou de circuit de chauffage (BST) est déterminé avec une pondération en fonction de l'âge à partir des états d'alimentation des surfaces chauffantes (VZ).

7. Procédé selon la revendication 4, **caractérisé en ce que** la valeur de consigne pour l'état d'alimentation d'immeuble ou de circuit de chauffage (BST) correspond à un courant volumique nominal prescrit d'une surface chauffante et/ou à une position de levage prescrite d'une vanne de surface chauffante.

8. Procédé selon une des revendications précédentes, **caractérisé en ce que** une valeur limite supérieure ou inférieure est prescrite pour la valeur de consigne ou la valeur de correction (VLTₛ) en vue de la régulation de puissance thermique, moyennant quoi la valeur limite supérieure et/ou inférieure peut dépendre de la température extérieure.

9. Régulateur d'état d'alimentation pour réguler un état d'alimentation d'immeuble ou de circuit de chauffage (BST) comportant un module d'adaptation de puissance thermique (1), dans lequel l'état d'alimentation d'un immeuble ou d'un circuit de chauffage (BST) est déterminé à partir des états d'alimentation (VZ) des surfaces chauffantes d'un immeuble ou d'un circuit de chauffage et, à partir de cela, une valeur de consigne ou une valeur de correction (VLTₛ) en vue d'une régulation de puissance thermique d'un chauffage par le sol est déterminée, moyennant quoi la régulation de puissance thermique prescrit une température aller et/ou un courant de masse d'une installation de chauffage, **caractérisé par** un compteur de proportion de chaleur(6) pour détecter une valeur de courant volumique de surfaces chauffante (VS, ΔV) et un module (3) pour déterminer l'état d'alimentation de surface chauffante (VZ) d'une surface chauffante à partir de la valeur de courant volumique de surfaces chauffante (VS, ΔV) au moyen d'une courbe caractéristique (K), moyennant quoi la compteur de proportion de chaleur (6) fait partie d'un système de répartition des coûts de chauffage, qui détecte et évalue les valeurs de courant volumique de surfaces chauffante (VS, ΔV) afin de détecter la puissance de chauffage.

10. Régulateur d'état d'alimentation selon la revendication 9, **caractérisé en ce que** le compteur de proportion de chaleur (6) pour détecter la valeur de courant volumique de surfaces chauffante (VS, ΔV) et/ou le module (3) pour déterminer l'état d'alimentation de surface chauffante (VZ) est intégré dans une unité de régulation de température d'une pièce individuelle.
